# EUROPÄISCHE PATENTSCHRIFT

(11) **EP 1 275 911 B1**
(45) Veröffentlichungstag und Bekanntmachung des Hinweises auf die Patenterteilung: **17.10.2012**
(21) Anmeldenummer: 02014271.7
(22) Anmeldetag: 26.06.2002
(51) Int. Cl.: F24H 9/20, B60H 1/22, F23N 5/24

(54) **Verfahren zur Überhitzungserkennung bei einer Heizeinrichtung**
Method for detecting overheating in a heating installation
Procédé pour détecter une surchauffe dans une installation de chauffage

(30) Priorität: 26.06.2001 DE 10130810
(43) Veröffentlichungstag der Anmeldung: 15.01.2003
(73) Patentinhaber: J. Eberspächer GmbH & Co. KG, 73730 Esslingen (DE)
(72) Erfinder: Krämer, Michael, 70193 Stuttgart (DE); Knies, Tobias, 71394 Kernen (DE); Pfister, Wolfgang, 73732 Esslingen (DE)
(74) Vertreter: Ruttensperger, Bernhard

(56) Entgegenhaltungen:
- EP-A- 0 892 215
- DE-A- 4 446 829
- DE-A- 19 524 260
- DE-C- 19 605 323
- US-A- 4 726 514
- US-A- 4 944 454

## Beschreibung

Die vorliegende Erfindung betrifft ein Verfahren zur Überhitzungserkennung bei einer Heizeinrichtung bzw. eine Heizeinrichtung.

Heizeinrichtungen, wie sie beispielsweise als Standheizungen oder Zusatzheizungen bei Kraftfahrzeugen Einsatz finden, weisen eine im Allgemeinen als Heizbrenner ausgebildete Wärmequelle auf. Diese Wärmequelle ist umgeben von einem Wärmetauscherbereich, der von dem zu erwärmenden Medium, im Allgemeinen Heizwasser, durchströmt wird. Vor allem bei Einsatz von Heizbrennern als Wärmequelle muss darauf geachtet werden, dass die im Bereich dieser Wärmequelle auftretenden vergleichsweise hohen Temperaturen nicht zu einer Beschädigung der diese Wärmequelle umgebenden Komponenten, also beispielsweise des Wärmetauscherbereichs führen. Hierfür ist es bekannt, neben dem sogenannten Flammfühler, welcher im Bereich der Wärmequelle angeordnet ist und die dort vorhandene Temperatur messen kann, im Bereich des Wärmetauschers an einer die Wärmequelle umgebenden Wandung einen weiteren Temperaturfühler als sogenannten Überhitzungsfühler bereitzustellen. Dieser Überhitzungsfühler kann unmittelbar die Temperatur des thermisch sehr stark beaufschlagten, der Wärmequelle nahen Bereichs des Wärmetauscherbereichs erfassen. Wenn eine übermäßig hohe Temperatur in diesem Bereich auftritt, kann eine Warnung erzeugt werden oder es kann auch der Brenner abgeschaltet bzw. in seiner Heizleistung verringert werden. Die Gefahr, dass eine Überhitzung auftritt, besteht beispielsweise dann, wenn zwar der Heizflüssigkeitskreislauf mit Heizflüssigkeit, also beispielsweise mit Wasser, gefüllt ist, wenn jedoch beispielsweise auf Grund einer defekten Förderpumpe keine Wasserzirkulation vorhanden ist und somit aus dem Bereich des Wärmetauscherbereichs auch keine Wärme abgeführt wird. Weiter ist es insbesondere bei Neumontage oder nach Reparaturarbeiten problematisch, wenn der Heizflüssigkeitskreislauf nicht oder nicht vollständig mit Heizflüssigkeit gefüllt wird. Es können dann insbesondere im Wärmetauscherbereich Luftansammlungen auftreten, die ebenfalls dazu führen, dass auf Grund mangelnder Wärmeabfuhr eine Überhitzung erzeugt wird.

Aus der DE 44 46 829 A1 sind ein Verfahren zur Überhitzungserkennung bei einer Heizeinrichtung sowie eine zur Erhitzungserkennung ausgebildete Heizeinrichtung bekannt. Die hinsichtlich ihres Betriebs bzw. Überhitzungszustandes zu überwachende Heizeinrichtung umfasst eine als Brenner ausgebildete Wärmequelle und einen mit zu erwärmendem Fluid durchströmbaren Wärmetauscherbereich. Es sind weiterhin zwei Sensoranordnungen in Form jeweiliger Temperatursensoren vorhanden. Eine erste dieser Sensoranordnungen ist dazu ausgebildet, ein Temperatursignal zu erzeugen, welches in Zusammenhang mit dem Betrieb der Wärmequelle, also des Brenners steht. Diese Sensoranordnung ist nahe dem Verbrennungsgasaustritt eines Flammrohrs an einem als Gasmantel bezeichneten inneren Wärmetauschergehäuse vorgesehen. Eine zweite der Sensoranordnungen dient dazu, die Temperatur des zu erwärmenden Fluids zu erfassen bzw. ein entsprechendes Signal zu liefern. Mittels der zweiten Sensoranordnung wird anhand einer oberen und einer unteren Temperaturschwelle der Brenner des Netzgeräts aktiviert bzw. deaktiviert. Damit wird der Betriebszustand der Wärmequelle definiert. Zur Überhitzungserkennung wird das Temperatursignal der ersten Sensoranordnung, die als Überhitzungstemperaturfühler bezeichnet wird, herangezogen, indem der Gradient, also die zeitliche Änderung dieses Signals, mit einem zugeordneten Schwellenwert verglichen wird. Bei einer alternativen Vorgehensweise wird der Differenzwert der durch die beiden Sensorsignale repräsentierten Größen mit einem zugeordneten Schwellenwert verglichen.

Es ist die Aufgabe der vorliegenden Erfindung, ein Verfahren zur Überhitzungserkennung bei einer Heizeinrichtung bzw. eine Heizeinrichtung bereitzustellen, mit welcher bei einfachem Aufbau das Auftreten einer Überhitzung zuverlässig erkannt werden kann.

Gemäß einem ersten Aspekt der vorliegenden Erfindung wird diese Aufgabe gelöst durch ein Verfahren zur Überhitzungserkennung bei einer Heizeinrichtung gemäß Anspruch 1.

In Abkehr von der aus dem Stand der Technik bekannten Anordnung, bei welcher unmittelbar an der thermisch sehr stark beaufschlagten Gehäusewand des Wärmetauscherbereichs die Temperatur erfasst wird, geht die vorliegende Erfindung den Weg, zunächst die Temperatur beispielsweise im Bereich des Fluidaustritts zu erfassen. Es muss also nicht notwendigerweise ein direkter Wärmeübertragungskontakt mit der thermisch sehr stark beaufschlagten Komponente bestehen. Dies würde grundsätzlich jedoch das Problem zur Folge haben, dass beispielsweise dann, wenn der Wärmetauscherbereich überhaupt nicht mit zu erwärmender Flüssigkeit gefüllt ist, auf Grund der erschwerten Wärmeleitung nicht erkennbar ist, wann eine bestimmte Temperatur in dem nahe dem Fluidaustritt liegenden Bereich auf Probleme bei der Wärmeabfuhr bzw. auf eine Überhitzung hinweist. Dazu sieht die vorliegende Erfindung ferner vor, dass ein bestimmter Zeitbereich definiert wird, in welchem eine Überprüfung der Temperatur in diesem dem Fluidaustritt nahen Bereich vorgenommen werden soll. Es wird diese Überprüfung dann vorgenommen, wenn erkannt worden ist, dass die Wärmequelle in einem bestimmten Betriebszustand ist, also wenn beispielsweise diese ihre maximale Heizleistung oder eine vorbestimmte Heizleistung erreicht hat. Erst dann können letztendlich auch in thermisch beeinflussten Bereichen Temperaturänderungen erkannt werden und beruhend auf diesen Temperaturänderungen kann dann entschieden werden, ob diese in einem bei normalem Betrieb zu erwartenden Bereich liegen, oder ob sie auf Probleme bei der Wärmeabgabe hindeuten.

Beispielsweise kann bei dem erfindungsgemäßen Verfahren vorgesehen sein, dass die erste Sensoranordnung einen Temperatursensor zur Erfassung einer mit der Temperatur im Bereich der Wärmequelle in Zusammenhang stehenden Größe umfasst und dass die erste Größe durch Bilden des zeitlichen Gradienten der Temperatur im Bereich der Wärmequelle ermittelt wird.

Durch die Auswertung von Temperaturgradienten bzw. mit der Temperaturänderung in Zusammenhang stehenden Größen liegen Parameter vor, welche in zuverlässiger Art und Weise erkennen lassen, ob eine Überhitzung vorliegt oder nicht, insbesondere auch dann, wenn nicht unmittelbar das thermisch am stärksten beanspruchte Bauteil hinsichtlich seiner thermischen Entwicklung abgetastet wird.

Hierzu kann weiter vorgesehen sein, dass die zweite Größe durch Bilden des zeitlichen Gradienten der Temperatur im Bereich der zweiten Sensoranordnung ermittelt wird.

Um eine eine zuverlässige Auswertung zulassende Referenzbasis für die zweite Größe zu erhalten, kann vorgesehen sein, dass der vorbestimmte Wertebereich der zweiten Größe begrenzt ist durch einen bei Durchströmen des Wärmetauscherbereichs mit Fluid mit einer im Betrieb minimal zu erwartenden Strömungsrate sich ergebenden Wert der zweiten Größe. Weiter ist es möglich, dass der vorbestimmte Wertebereich der zweiten Größe begrenzt ist durch einen bei Durchströmen des Wärmetauscherbereichs mit Fluid mit einer im Betrieb maximal zu erwartenden Strömungsrate sich ergebenden Wert der zweiten Größe.

Da insbesondere bei Inbetriebnahme eines Systems eine allmähliche Erwärmung stattfinden wird, ist es weiterhin vorteilhaft, den Wertebereich, in welchem die zu überwachende zweite Größe in normalem Betrieb liegen soll, nicht statisch zu halten, sondern diesen vorbestimmten Wertebereich mit fortschreitender Zeit zu verändern, beispielsweise zu vergrößern.

Gemäß einem weiteren Aspekt der vorliegenden Erfindung wird die eingangs genannte Aufgabe gelöst durch eine Heizeinrichtung gemäß Anspruch 8.

Auch hier wird das wesentliche Prinzip der vorliegenden Erfindung erkennbar, nämlich zum einen das Definieren eines Zeitbereichs, in welchem überhaupt überprüft wird, ob eine auszuwertende Größe auf einen Fehler hindeutet, und zum anderen dann die Maßnahme, eine bestimmte Größe, die in dem zur Auswertung vorgesehenen Zeitraum bei eventueller Überhitzung entsprechende Änderungen zeigen sollte, tatsächlich auch auszuwerten. Beispielsweise kann vorgesehen sein, dass die Wärmequelle einen Heizbrenner umfasst und dass die erste Sensoranordnung einen Sensor zur Erfassung einer mit einer Flammtemperatur des Heizbrenners in Zusammenhang stehenden Größe umfasst. Ferner ist es möglich, dass die zweite Sensoranordnung einen Temperatursensor umfasst, welcher nicht in direktem Wärmeerfassungskontakt mit einem die Wärmequelle umschließenden Gehäusebereich des Wärmetauscherbereichs steht.

Eine konstruktiv vergleichsweise einfach aufzubauende Ausgestaltungsform kann dadurch erhalten werden, dass der Temperatursensor der zweiten Sensoranordnung die Temperatur eines den Wärmetauscherbereich an der von der Wärmequelle abgewandten Seite umschließenden Gehäusebereichs erfasst. Beispielsweise ist es möglich, dass der Temperatursensor der zweiten Sensoranordnung außerhalb des von dem den Wärmetauscherbereich durchströmenden Fluid durchströmten Volumenbereichs des Wärmetauscherbereichs angeordnet ist.

Ausführungsbeispiele der vorliegende Erfindung werden nachfolgend mit Bezug auf die beiliegenden Zeichnungen beschrieben. Es zeigt:
- Fig. 1: eine schematische Ansicht einer Heizeinrichtung mit Wärmetauscherbereich;
- Fig. 2: den zeitlichen Verlauf verschiedener die Temperaturänderung in verschiedenen Systembereichen wiedergebender Größen.

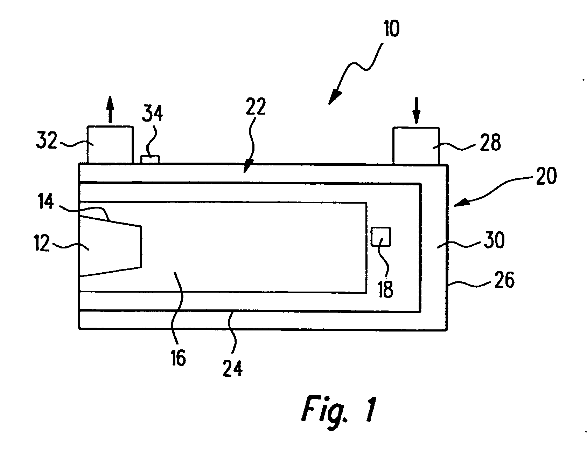

In Fig. 1 ist eine Heizeinrichtung allgemein mit 10 bezeichnet. Die Heizeinrichtung 10 weist eine in ihrem inneren Bereich positionierte und allgemein mit 12 bezeichnete Wärmequelle in Form eines Heizbrenners 14 mit einem diesem zugeordneten Flammrohr 16 auf. Der Aufbau derartiger Heizbrenner ist grundsätzlich hinlänglich bekannt und wird daher hier nicht detailliert beschrieben. Der Wärmequelle 12 bzw. dem Heizbrenner 14 ist ein allgemein mit 18 bezeichneter Flammfühler zugeordnet. Dies ist beispielsweise ein Temperatursensor, der die Temperatur im Austrittsbereich des Flammrohrs 16 erfasst. Die Temperatur entspricht also beispielsweise näherungsweise der Temperatur der das Flammrohr 16 verlassenden Gase und liefert einen Hinweis darauf, ob bzw. in welchem Ausmaß im Flammrohr 16 Verbrennung stattfindet.

Die Wärmequelle 12 ist umgeben von einer zumindest bereichsweise doppelwandigen Gehäuseanordnung 20, welche im Wesentlichen einen Wärmetauscherbereich 22 bildet. Eine innere Gehäusewandung 24 ist dabei die Wärmequelle 12 im Wesentlichen direkt umgebend angeordnet und ist somit auch in unmittelbarem thermischen Kontakt mit den aus dem Flammrohr 16 austretenden Verbrennungsabgasen. Eine äußere Gehäusewandung 26, im Allgemeinen auch als Wassermantel bezeichnet, begrenzt bzw. umgibt den Wärmetauscherbereich 22 nach außen hin. Es ist des Weiteren ein Flüssigkeiteintritt 28 vorhanden, über welchen die zu erwärmende Flüssigkeit in den zwischen den beiden Gehäusewandungen 24, 26 gebildeten Raumbereich 30 einströmen kann. Nach Durchströmen dieses Raumbereichs verlässt die dann erwärmte Flüssigkeit über einen Fluidaustritt 32 die Heizeinrichtung 10 und wird einem zu erwärmenden System zugeführt.

An der Außenseite der Gehäusewandung 26 ist ein Temperatursensor 34 vorgesehen. Dieser Temperatursensor 34 erfasst die Temperatur der Gehäusewandung 26 in einem Bereich nahe dem Flüssigkeitsaustritt 32. Diese Temperatur korrespondiert im normalen Betrieb mit einiger zeitlichen Verzögerung - bedingt durch die Trägheit bei der Wärmeübertragung - mit der Temperatur der die Heizeinrichtung 10 verlassenden Flüssigkeit.

Probleme können bei derartigen Heizeinrichtungen im Betrieb dann auftreten, wenn beispielsweise auf Grund der Tatsache, dass in dem Heizflüssigkeitskreislauf keine oder zu wenig Heizflüssigkeit vorhanden ist, im Bereich des Wärmetauscherbereichs 22, also d.h. im Raumbereich 30, keine oder nur wenig Flüssigkeit vorhanden ist. Die von den Verbrennungsabgasen bzw. der Flamme des Heizbrenners auf die Gehäusewandung 24 übertragene Wärme wird dann nur vergleichsweise langsam nach außen hin abgegeben. Es besteht somit die potentielle Gefahr einer Überhitzung dieser Gehäusewandung 24. Dieses Problem kann auch dann vorhanden sein, wenn zwar der Heizflüssigkeitskreislauf und somit auch der Raumbereich 30 mit Flüssigkeit gefüllt ist, wenn aber beispielsweise auf Grund eines Pumpendefekts keine Flüssigkeitszirkulation stattfindet. Es wird dann bei laufendem Heizbrenner 12 zwar Wärme von der Gehäusewandung 24 auf die im Raumbereich 30 vorhandene Flüssigkeit übertragen, da diese Flüssigkeit jedoch ruht, wird die Wärme nicht aus dem Bereich des Wärmetauscherbereichs 22 abgeführt. Auch dann besteht die potentielle Gefahr einer Überhitzung.

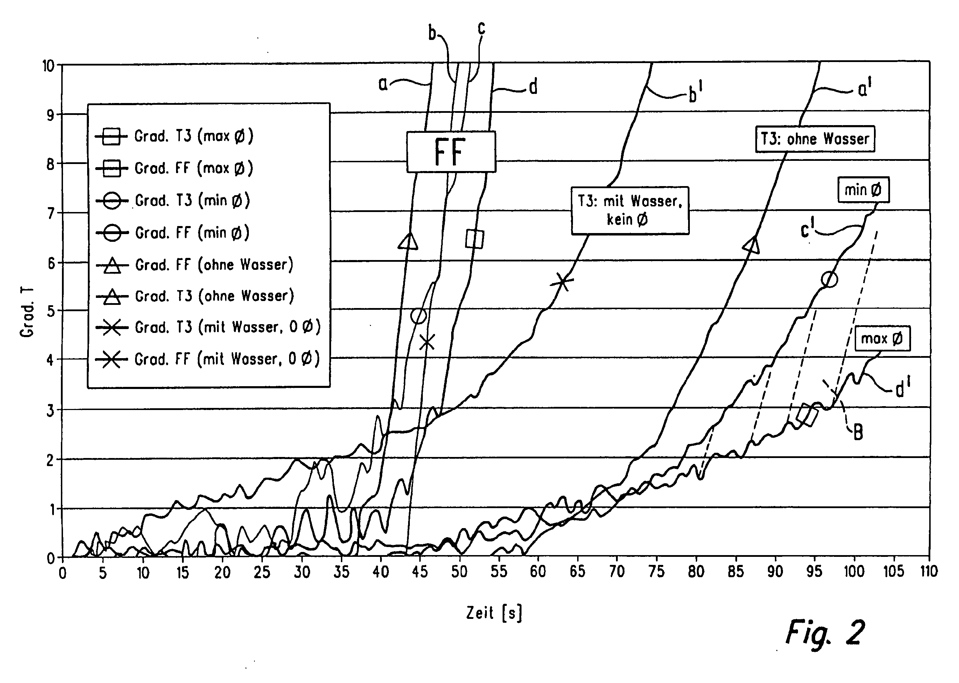

Die vorliegende Erfindung sieht nun Maßnahmen vor, mit welchen allein durch das Bereitstellen des Temperatursensors 34 und des Flammfühlers bzw. Temperatursensors 18 erkannt werden kann, ob eine Überhitzung im Bereich der Heizeinrichtung 10, insbesondere im Bereich des Wärmetauscherbereichs 22 vorliegt, obgleich keine direkte Kontaktierung des thermisch am stärksten beaufschlagten Bereichs, also der Gehäusewandung 24, vorhanden ist, wie dies beispielsweise beim Stand der Technik der Fall ist. Dies wird im Folgenden auch mit Bezug auf die Fig. 2 erläutert. Dort sind verschiedene Kurven dargestellt, die für verschiedene Betriebszustände die zeitliche Änderung der von den Temperatursensoren 18, 34 erfassten Temperaturen darstellen. Die Kurven a, b, c und d, welchen auch die Bezeichnung FF zugeordnet ist, zeigen für verschiedene im Folgenden noch genauer angegebene Betriebszustände der Heizeinrichtung den zeitlichen Gradienten der durch den Flammfühler bzw. Temperatursensor 18 erfassten Temperatur. Dabei ist die Kurve a einem Betriebszustand zugeordnet, bei welchem auf Grund einer Leckage oder auf Grund mangelnder Befüllung im Wärmetauscherbereich 22 keine Flüssigkeit vorhanden ist. Die Kurve b gibt den Zustand an, bei welchem zwar im Wärmetauscherbereich 22 Flüssigkeit vorhanden ist, jedoch beispielsweise auf Grund eines Pumpendefekts kein Durchfluss vorhanden ist. Die Kurve c steht für den Fall, dass das System korrekt arbeitet und die Flüssigkeit mit der im normalen Betrieb minimal zu erwartenden Strömungsrate, also dem minimalen Durchfluss, durch den Wärmetauscherbereich 22 hindurchtritt. Schließlich gibt die Kurve d den Fall wieder, in welchem ebenfalls bei korrekter Betriebsweise die Flüssigkeit den Wärmetauscherbreich 22 mit dem im Betrieb maximal zu erwartenden Durchfluss bzw. maximal zu erwartender Strömungsrate durchströmt. Diesen Kurven a, b, c und d kann man entnehmen, dass nach der Inbetriebnahme des Heizbrenners 12 etwa bis zu einem Zeitbereich von 40 sec. ein nur allmählicher Temperaturanstieg durch den Temperatursensor 18 erfasst wird. Ab dem Zeitpunkt von etwa 40 sec. nach dem Aktivieren des Systems ist ein deutliches Abknicken und ein sehr steiler Anstieg der Temperatur mit einem ebenso steilen Temperaturgradienten erkennbar. Dabei ist für alle Betriebszustände näherungsweise der gleiche Verlauf des Gradienten vorhanden. Dies erklärt sich daraus, dass die unmittelbar im Bereich des Flammrohrs 16 erfasste Temperatur von den im Wärmetauscherbereich 22 vorhandenen Zuständen nahezu unbeeinflusst ist. Eine Unterscheidung lässt sich dahingehend vornehmen, dass in den durch die Kurven c und d repräsentierten korrekten Betriebszuständen der Temperaturanstieg hinsichtlich der nicht korrekten Betriebszustände etwas später auftritt, was darauf zurückgeführt werden kann, dass gleichwohl ein verringerter Wärmestau vorhanden ist.

Die mit a', b', c' und d' bezeichneten Kurven zeigen die entsprechenden Verläufe des Temperaturgradienten für die verschiedenen Betriebszustände, wie sie im Bereich des in Fig. 2 mit T3 bezeichneten Temperatursensors an der Außenseite der äußeren Gehäusewandung 26 erfasst werden. Hier ist zunächst durch die Kurven c' und d' ein schraffiert eingezeichneter Bereich B nach oben und nach unten begrenzt, welcher Bereich letztendlich einen korrekten Betriebszustand reflektiert. Im Falle korrekten Betriebs mit minimalem Durchfluss wird mit der hinsichtlich des Temperaturanstiegs im Bereich des Flammrohrs 16 zu erwartenden zeitlichen Verzögerung auch durch die langsam strömende Flüssigkeit im Bereich des Temperatursensors 34 bzw. T3 ein allmählicher Temperaturanstieg bzw. ein allmählicher Anstieg des Temperaturgradienten auftreten. Wird im Bereich des normalen, korrekten Betriebs der Durchfluss erhöht, so hat dies zur Folge, dass aus dem Bereich des Wärmetauscherbereichs 22 vermehrt Wärme abgeführt wird und somit auch die verschiedenen thermisch beaufschlagten Komponenten, wie beispielsweise die äußere Gehäusewandung 26, langsamer erwärmt werden. Ist das System zwar mit Flüssigkeit befüllt, liegt jedoch kein Durchfluss vor, so führt dies, wie der Kurve b' entnehmbar, zu einem Verlauf des Temperaturgradienten, der hinsichtlich des am Flammfühler bzw.

Temperatursensor 18 erkannten Verlaufs eine vergleichsweise geringe zeitliche Verzögerung hat. Grund hierfür ist, dass die im Bereich des Wärmetauscherbereichs 22 stehende Flüssigkeit ein vergleichsweise guter Wärmeleiter ist und somit auch die Gehäusewandung 26 rasch erwärmt wird. Ist das System nicht oder nicht ausreichend mit Flüssigkeit befüllt, so wird im Bereich des Temperatursensors 34 ebenfalls ein über dem normalen liegender Temperaturanstieg erkannt werden, jedoch mit deutlicher zeitlicher Verzögerung, wie der Kurve a' entnehmbar. Diese Verzögerung ist darauf zurückzuführen, dass die dann im Wärmetauscherbereich 22 vorhandene Luft eine deutlich bessere thermische Isolation bereitstellt, als nicht zirkulierende Flüssigkeit.

Dem Diagramm der Fig. 2 kann man jedoch entnehmen, dass bald nach dem deutlichen Temperaturanstieg im Bereich des Temperatursensors 18 auch im Bereich des an der Außenseite der Gehäusewandung 26 vorgesehenen Temperatursensors 34 ein Ausscheren des Temperaturgradienten aus dem durch die beiden Kurven c' und d' nach oben bzw. nach unten begrenzten zulässigen Bereich B für den Temperaturgradienten, gemessen im Bereich des Temperatursensors 34, auftritt. Von dieser Erkenntnis macht die vorliegende Erfindung Nutzen dadurch, dass zunächst durch Beobachtung des vom Temperatursensor bzw. Flammfühler 18 ausgegebenen Signals bzw. des daraus gebildeten zeitlichen Gradienten der Betriebszustand der Wärmequelle 12 bzw. des Heizbrenners 14 bestimmt wird. Erst dann, wenn dort eine vergleichsweise starke Verbrennung bzw. Wärmeerzeugung auftritt, kann letztendlich auch mit einigermaßen großer Genauigkeit beruhend auf dem Sensorsignal des Temperatursensors 34 durch die Gradientenauswertung erkannt werden, ob dieser Gradient noch in dem durch die Kurven c' und d' definierten vorbestimmten und zulässigen Wertebereich B liegt oder ob hier, wie anhand der Kurven a' und b' erkennbar, eine deutliche Abweichung vorhanden ist. Der Temperatursensor 18 liefert mit seinem Ausgangssignal bzw. dem daraus gebildeten Temperaturgradienten letztendlich den Auslöser für die Auswertung des Temperaturgradienten, der aus dem Signal des Temperatursensors 34 erzeugt wird. Diese Zusammenwirkung ist insbesondere daher von Bedeutung, da der Zeitpunkt, zu dem nach der Aktivierung des Systems eine Verbrennung auftritt und somit auch die Temperaturen im Bereich der erfindungsgemäßen Einrichtung 10 sich spürbar ändern, stark von den äußeren Umständen, wie z.B. der Außentemperatur, der Luftfeuchtigkeit usw., abhängt. Das Heranziehen des durch das Sensorsignal des Temperatursensors 18 generierten zeitlichen Gradienten in der Art und Weise, dass ein Überschreiten einer bestimmten vorgebbaren Gradientenschwelle auf einen Betriebszustand hindeutet, in dem nunmehr Verbrennung vorliegt, erlaubt es, die Auswertung des Signals von dem Temperatursensor 34 so bald als möglich vorzunehmen, nämlich unmittelbar dann, wenn in den verschiedenen Systembereichen überhaupt eine Temperaturänderung aufgetreten sein kann. Das erfindungsgemäße System wird hinsichtlich der Überhitzungserkennung somit gegenüber äußeren Einflüssen unempfindlich.

Man erkennt in Fig. 2 des Weiteren, dass mit fortschreitender Zeit auch der Wertebereich B, in welchem der aus dem Signal des Temperatursensors 34 generierte Gradient liegen darf, zunimmt bzw. die obere Grenze stärker erhöht wird, als die untere Grenze.

Wird bei der Überwachung des Temperaturgradienten, wie er durch das Signal des Temperatursensors 34 erhalten werden kann, festgestellt, dass der Wert in dem durch die Kurven c' und d' repräsentierten Bereich liegt, so kann erkannt werden, dass keine Systemüberhitzung vorliegt. Der Heizbrenner kann dann in der geforderten Art und Weise weiterbetrieben werden. Wird erkannt, dass der im Bereich des Fluidaustritts 32 vorhandene Temperaturgradient nicht in dem zulässigen Bereich liegt, so kann auf das Vorliegen eines Fehlerzustands geschlossen werden. Es können dann Sicherheitsmaßnahmen, wie beispielsweise das Abschalten der Wärmequelle 12 oder das Reduzieren der Heizleistung derselben, ergriffen werden.

Durch die vorliegende Erfindung wird es möglich, ohne einen Temperatursensor unmittelbar an die thermisch sehr stark beaufschlagten Komponenten, beispielsweise die innere Gehäusewandung 24, heranzuführen, nach vergleichsweise kurzer Zeit zu erkennen, ob das System korrekt arbeitet, oder ob die Gefahr einer Überhitzung besteht. Insbesondere ist es gemäß den Prinzipien der vorliegenden Erfindung auch nicht nötig, einen Temperatursensor in den Raumbereich 30 eintauchen zu lassen. Obgleich selbst bei einer derartigen Anordnung die Prinzipien der vorliegenden Erfindung genutzt werden können, wird durch die erfindungsgemäß vorgenommene Art und Weise der Auswertung selbst dann, wenn nur die Temperatur an der Außenseite der äußeren Gehäusewandung 26 erfasst wird, eine ausreichend schnelle Unterscheidung normaler und kritischer Betriebszustände gewährleistet. Ein wesentlicher Grund hierfür ist, dass zwar im Gegensatz zum Eintauchen eines Temperatursensors in den Raumbereich 30 hier die äußere Gehäusewandung 26 eine bestimmte thermische Isolierung liefert, dass aber der Temperatursensor 34 an sich nicht mehr so stark isoliert werden muss, insbesondere flüssigkeitsdicht isoliert werden muss, wie dies dann der Fall ist, wenn er in den Raumbereich 30, der von der zu erwärmenden Flüssigkeit durchströmt wird, eintauchen soll. Durch die vorliegende Erfindung wird also eine sehr einfach aufzubauende Anordnung bzw. eine ebenso einfach durchzuführende Vorgehensweise vorgeschlagen, mit welcher vor allem bei Inbetriebnahme einer Heizeinrichtung, beispielsweise auch bei der ersten Inbetriebnahme oder auch der ersten Inbetriebnahme nach der Durchführung von Wartungsarbeiten oder dergleichen, schnell erkannt werden kann, ob eine Überhitzung vorliegt, und entsprechende Maßnahmen ergriffen werden können.

Es sei darauf hingewiesen, dass insbesondere die erfindungsgemäße Vorgehensweise bei der Temperaturauswertung selbstverständlich auch dann vorgenommen werden kann, wenn in Abweichung von dem in Fig. 1 dargestellten Aufbau der Temperatursensor 34 in den Raumbereich 30 eintaucht, also ggf. von der zu erwärmenden Flüssigkeit umströmt wird. Auch kann die erfindungsgemäße Vorgehensweise dann vorgesehen sein, wenn der Temperatursensor 34 unmittelbar auf der Gehäusewandung 24 aufsitzt und somit im Wesentlichen deren Temperatur erfasst. Des Weiteren ist die in der Fig. 1 vorgesehene Positionierung des Temperatursensors 34 im Bereich des Flüssigkeitsaustritts 32 vorteilhaft. Gleichwohl ist es selbstverständlich möglich, den Temperatursensor 34 auch an einem anderen Bereich zwischen dem Flüssigkeitseintritt 28 und dem Flüssigkeitsaustritt 32 zu positionieren, beispielsweise auch in der Nähe des Flüssigkeitseintritts 28. Von Bedeutung ist hier die Erkenntnis, dass wesentliche Temperaturänderungen der den Raumbereich 30 durchströmenden Flüssigkeit vor allem nahe dem Flüssigkeitseintritt 28 auftreten. Die den Raumbereich 30 durchströmende Flüssigkeit bewegt sich dann mit näherungsweise gleich bleibender Temperatur zum Flüssigkeitsaustritt 32. Bei Erfassung der Temperatur mittels des Temperatursensors 34 im Bereich des Flüssigkeitseintritts 28, ggf. auch dann, wenn die Temperatur außen an der Gehäusewandung 26 erfasst wird, wird also zu einem Temperaturverlauf führen, der qualitativ dem in der Fig. 2 dargestellten Verlauf entspricht. Es kann also auch dann die erfindungsgemäße Vorgehensweise bei der Auswertung vorgesehen sein.

## Patentansprüche

1. Verfahren zur Überhitzungserkennung bei einer Heizeinrichtung, welche Heizeinrichtung umfasst:
- eine Wärmequelle (12),
- eine den Betriebszustand der Wärmequelle (12) sensierende erste Sensoranordnung (18),
- einen mit zu erwärmendem Fluid durchströmbaren Wärmetauscherbereich (22),
- eine zweite Sensoranordnung (34) zur Erfassung einer Temperatur, welche bei Durchströmung des Wärmetauscherbereichs (22) mit Fluid mit der Temperatur des Fluids korrespondiert, vorzugsweise im Bereich eines Fluidaustritts (32), an welchem Fluidaustritt (32) Fluid, das den Wärmetauscherbereich (22) durchströmt hat, zur Abgabe an ein zu erwärmendes System austritt,
wobei das Verfahren die Schritte umfasst:
a) beruhend auf einer Sensorausgabe der ersten Sensoranordnung (18), Ermitteln einer den Betriebszustand der Wärmequelle (12) charakterisierenden ersten Größe,
b) beruhend auf einer Sensorausgabe der zweiten Sensoranordnung (34), Ermitteln einer mit der Temperatur im Bereich der zweiten Sensoranordnung in Zusammenhang stehenden zweiten Größe,
c) Vergleichen der ersten Größe mit einer Gradientenschwelle zum Ermitteln des Betriebszustandes der Wärmequelle (12),
d) dann, wenn die erste Größe über der Gradientenschwelle ist, Überprüfen, ob die zweite Größe in einem vorbestimmten Wertebereich (B) für diese liegt,
e) dann, wenn die zweite Größe nicht in dem vorbestimmten Wertebereich (B) liegt, Bestimmen, dass die Heizeinrichtung (10) in einem Überhitzungszustand ist.

2. Verfahren nach Anspruch 1,
**dadurch gekennzeichnet, dass** die erste Sensoranordnung (18) einen Temperatursensor (18) zur Erfassung einer mit der Temperatur im Bereich der Wärmequelle (12) in Zusammenhang stehenden Größe umfasst und dass die erste Größe durch Bilden des zeitlichen Gradienten der Temperatur im Bereich der Wärmequelle (12) ermittelt wird.

3. Verfahren nach Anspruch 2,
**dadurch gekennzeichnet, dass** die Wärmequelle (12) einen Heizbrenner (14) umfasst und dass durch die erste Sensoranordnung (18) eine mit der Flammtemperatur des Heizbrenners (14) in Zusammenhang stehende Größe erfasst wird.

4. Verfahren nach einem der Ansprüche 1 bis 3,
**dadurch gekennzeichnet, dass** die zweite Größe durch Bilden des zeitlichen Gradienten der Temperatur im Bereich der zweiten Sensoranordnung (34) ermittelt wird.

5. Verfahren nach einem der Ansprüche 1 bis 4,
**dadurch gekennzeichnet, dass** der vorbestimmte Wertebereich (B) der zweiten Größe begrenzt ist durch einen bei Durchströmen des Wärmetauscherbereichs (22) mit Fluid mit einer im Betrieb minimal zu erwartenden Strömungsrate sich ergebenden Wert der zweiten Größe.

6. Verfahren nach einem der Ansprüche 1 bis 5,
**dadurch gekennzeichnet, dass** der vorbestimmte Wertebereich (B) der zweiten Größe begrenzt ist durch einen bei Durchströmen des Wärmetauscherbereichs (22) mit Fluid mit einer im Betrieb maximal zu erwartenden Strömungsrate sich ergebenden Wert der zweiten Größe.

7. Verfahren nach einem der Ansprüche 1 bis 6,
**dadurch gekennzeichnet, dass** der vorbestimmte Wertebereich mit fortschreitender Zeit verändert wird, vorzugsweise vergrößert wird.

8. Heizeinrichtung, umfassend:
- eine Wärmequelle (12),
- eine den Betriebszustand der Wärmequelle (12) sensierende erste Sensoranordnung (18),
- einen mit zu erwärmendem Fluid durchströmbaren Wärmetauscherbereich (22),
- eine zweite Sensoranordnung (34) zur Erfassung einer Temperatur, welche bei Durchströmung des Wärmetauscherbereichs (22) mit Fluid mit der Temperatur des Fluids korrespondiert, vorzugsweise im Bereich eines Fluidaustritts (32), an welchem Fluidaustritt (32) Fluid, das den Wärmetauscherbereich (34) durchströmt hat, zur Abgabe an ein zu erwärmendes System austritt,
- eine Überhitzungsüberwachungseinheit, welche dazu ausgebildet ist, eine beruhend auf der Sensorausgabe der ersten Sensoranordnung erzeugte erste Größe mit einer Gradientenschwelle zu vergleichen, um zu ermitteln, ob die Wärmequelle (12) in einem vorbestimmten Betriebszustand ist, und dann, wenn die erste Größe über der Gradientenschwelle ist, durch Vergleich einer beruhend auf der Sensorausgabe der zweiten Sensoranordnung (34) erzeugten zweiten Größe mit einem für diese vorgegebenen Wertebereich (B) zu erkennen, ob die Heizeinrichtung (10) in einem Überhitzungszustand ist.

9. Heizeinrichtung nach Anspruch 8,
**dadurch gekennzeichnet, dass** die Wärmequelle (12) einen Heizbrenner (14) umfasst und dass die erste Sensoranordnung (18) einen Sensor (18) zur Erfassung einer mit einer Flammtemperatur des Heizbrenners (14) in Zusammenhang stehenden Größe umfasst.

10. Heizeinrichtung nach Anspruch 8 oder 9,
**dadurch gekennzeichnet, dass** die zweite Sensoranordnung (34) einen Temperatursensor (34) umfasst, welcher nicht in direktem Wärmeerfassungskontakt mit einem die Wärmequelle umschließenden Gehäusebereich (26) des Wärmetauscherbereichs (22) steht.

11. Heinzeinrichtung nach Anspruch 10,
**dadurch gekennzeichnet, dass** der Temperatursensor (34) der zweiten Sensoranordnung (34) die Temperatureines den Wärmetauscherbereich (22) an der von der Wärmequelle (12) abgewandten Seite umschließenden Gehäusebereichs (26) erfasst.

12. Heizeinrichtung nach Anspruch 10 oder 11,
**dadurch gekennzeichnet, dass** der Temperatursensor (34) der zweiten Sensoranordnung (34) außerhalb des von dem den Wärmetauscherbereich (22) durchsrömenden Fluid durchströmten Volumenbereichs des Wärmetauscherbereichs (22) angeordnet ist.

## Claims

1. A method for recognizing overheating of a heating device, the heating device comprising:
- a heat source (12),
- a first sensor arrangement (18) detecting the operating state of the heat source (12),
- a heat exchanger section (22) through which the heated fluid may flow,
- a second sensor arrangement (34) for detecting a temperature corresponding to the temperature of the fluid when the fluid flows through the heat exchanger section (22), preferentially in the region of a fluid discharge (32), the fluid flowing through said heat exchanger section (22) being discharged at said fluid discharge (32) to be transferred to a system to be heated,
the method comprising the following steps:
a) based on a sensor output of said first sensor arrangement (18) determining a first parameter characterising the operating state of the heat source (12),
b) based on a sensor output of said second sensor arrangement (34) determining a second parameter related to the temperature in the region of said second sensor arrangement,
c) comparing said first parameter with a gradient threshold for determining the operating state of said heat source (12),
d) if said first parameter is larger than said gradient threshold verifying if the second parameter is within a predetermined parameter range (B) for the latter,
e) if said second parameter is not in said predetermined parameter range (B) determining that said heating device (10) is in an overheating state.

2. The method according to claim 1,
**characterized by** the first sensor arrangement (18) comprising a temperature sensor (18) for determining a parameter related to the temperature in the region of said heat source (12) and by the first parameter being determined by calculating the time gradient of the temperature in the region of the heat source (12).

3. The method according to claim 2,
**characterized by** the heat source (12) comprising a heating burner (14) and by a - parameter related to the flame temperature of said heating burner (14) being determined by the first sensor arrangement (18).

4. The method according to one of claims 1 to 3,
**characterized by** the second parameter being determined by calculating the time gradient of the temperature in the region of the second sensor arrangement (34).

5. The method according to one of claims 1 to 4,
**characterized by** the predetermined parameter range (B) for the second parameter being limited by a value for the second parameter to be expected when fluid flows through the heat exchanger section (22) with a minimum flow rate to be expected in operation.

6. The method according to one of claims 1 to 5,
**characterized by** the predefined parameter range (B) for the second parameter being limited by a value of the second parameter resulting from the fluid flow through said heat exchanger section (22) with a maximum flow rate to be expected during operation.

7. The method according to one of claims 1 to 6,
**characterized by** the predefined parameter range being modified with time and being preferably increased.

8. A heating device, comprising:
- a heat source (12),
- a first sensor arrangement (18) detecting the operating state of the heat source (12),
- a heat exchanger section (22) through which the heated fluid may flow,
- a second sensor arrangement (34) for detecting a temperature corresponding to the temperature of the fluid when the fluid flows through the heat exchanger section (22), preferentially in the region of a fluid discharge (32), the fluid flowing through said heat exchanger section (22) being discharged at said fluid discharge (32) to be transferred to a system to be heated,
- an overheating monitoring unit designed to compare a first parameter generated on
- the basis of the sensor output of the first sensor arrangement with a gradient threshold to determine whether the heat source (12) is in a predefined operating state, and then, when the first parameter exceeds the gradient threshold to detect whether the heating device (10) is in an overheating state by comparing a second parameter generated on the basis of the sensor output of the second sensor arrangement (34) with a parameter range (B) predefined for the latter.

9. The heating device according to claim 8,
**characterized by** the heat source (12) comprising a heating burner (14) and in the first sensor arrangement (18) comprising a sensor (18) for detecting a parameter related to the flame temperature of said heating burner (14).

10. The heating device according to claim 8 or 9,
**characterized by** the second sensor arrangement (34) comprising a temperature sensor (34) which is not in direct heat detecting contact with a housing section (26) of said heat exchanger section (22) enclosing the heat source.

11. The heating device according to claim 10,
**characterized by** the temperature sensor (34) of the second sensor arrangement (34) detecting the temperature of a housing section (26) enclosing the heat exchanger section (22) at a side facing away from the heat source (12).

12. The heating device according to claim 10 or 11,
**characterized by** the temperature sensor (34) of the second sensor arrangement (34) being located outside the volume area of the heat exchanger section (22) where the fluid flowing through said heat exchanger section (22) flows through.

## Revendications

1. Une méthode de détection de surchauffe pour un dispositif de chauffage,
le dispositif de chauffage comprenant:
- une source de chaleur (12),
- un premier arrangement de capteurs (18) captant le mode d'opération de la source de chaleur (12),
- une section d'échangeur de chaleur (22) que le fluide à chauffer peut traverser,
- un deuxième arrangement de capteurs (34) pour capter une température correspondant à la température du fluide lors du passage à travers la section d'échangeur de chaleur (22), de préférence dans la région d'une sortie de fluide (32), le fluide ayant traversé la section d'échangeur de chaleur (22) sortant à cette sortie de fluide (32) pour entrant dans un système à chauffer,
la méthode comprenant les étapes suivantes :
a) basé sur l'émission de capteur du premier arrangement de capteurs (18) déterminer un premier paramètre caractérisant le mode d'opération de la source de chaleur (12),
b) basé sur l'émission de capteur du deuxième arrangement de capteurs (34) déterminer un deuxième paramètre associé à la température dans la région du deuxième arrangement de capteurs,
c) comparer le premier paramètre à un seuil de gradient pour déterminer le mode d'opération de la source de chaleur (12),
d) si le premier paramètre est plus grand que le seuil de gradient vérifier si le deuxième paramètre est dans une gamme prédéfinie de paramètre (B) pour ce dernier,
e) si le deuxième paramètre n'est pas dans la gamme de paramètre prédéfinie (B) vérifier que le dispositif de chauffage (10) se trouve dans un état de surchauffe.

2. La méthode selon la revendication 1,
**caractérisée par** le premier arrangement de capteurs (18) comprenant un capteur de température (18) pour capter un paramètre associé à la température dans la région de la source de chaleur (12) et par le premier paramètre étant déterminé en formant le gradient temporel de la température dans la région de la source de chaleur (12).

3. La méthode selon la revendication 1,
**caractérisée par** la source de chaleur (12) comprenant un brûleur de chauffage (14) et par un paramètre associé à la température de flamme du brûleur de chauffage (14) étant déterminé par le premier arrangement de capteurs (18).

4. La méthode selon une des revendications 1 à 3,
**caractérisée par** le deuxième paramètre étant déterminé en formant le gradient temporel de la température dans la région du deuxième arrangement de capteurs (34).

5. La méthode selon une des revendications 1 à 4,
**caractérisée par** la gamme de paramètre prédéfinie (B) du deuxième paramètre étant limitée par une valeur du deuxième paramètre résultant du passage du fluide à travers la section d'échangeur de chaleur (22) avec un débit minimal à attendre durant l'opération.

6. La méthode selon une des revendications 1 à 5,
**caractérisée par** la gamme de paramètre prédéfinie (B) du deuxième paramètre étant limitée par une valeur du deuxième paramètre résultant du passage du fluide à travers la section d'échangeur de chaleur (22) avec un débit maximal à attendre durant l'opération.

7. La méthode selon une des revendications 1 à 6,
**caractérisée par** la gamme de paramètre prédéfinie étant modifiée au cours du temps et étant de préférence augmentée.

8. Un dispositif de chauffage, comprenant :
- une source de chaleur (12),
- un premier arrangement de capteurs (18) captant le mode d'opération de la source de chaleur (12),
- une section d'échangeur de chaleur (22) que le fluide à chauffer peut traverser,
- un deuxième arrangement de capteurs (34) pour capter une température correspondant à la température du fluide lors du passage à travers la section d'échangeur de chaleur (22), de préférence dans la région d'une sortie de fluide (32), le fluide ayant traversé la section d'échangeur de chaleur (22) sortant à cette sortie de fluide (32) pour entrant dans un système à chauffer,
- une unité de surveillance de surchauffe, formée pour comparer un premier paramètre généré sur la base de la sortie du capteur du premier arrangement de capteurs à un seuil de gradient pour déterminer si la source de chaleur (12) est dans un mode d'opération prédéfini, et puis, si le premier paramètre dépasse le seuil de gradient, pour déterminer par la comparaison d'un deuxième paramètre généré sur la base de la sortie du capteur du deuxième arrangement de capteurs (34) à une gamme de paramètre (B) prévue pour ce dernier si le dispositif de chauffage (10) se trouve dans un état de surchauffe.

9. Le dispositif de chauffage selon la revendication 8,
**caractérisé par** la source de chaleur (12) comprenant un brûleur de chauffage (14) et par le premier arrangement de capteurs (18) comprenant un capteur (18) pour détecter un paramètre associé à une température de flamme du brûleur de chauffage (14).

10. Le dispositif de chauffage selon la revendication 8 ou 9,
**caractérisé par** le deuxième arrangement de capteurs (34) comprenant un capteur de température (34), n'étant pas en contact de détection de chaleur direct avec une section de boîtier entourant la source de chaleur (26) de la section d'échangeur de chaleur (22).

11. Le dispositif de chauffage selon la revendication 10,
**caractérisé par** le capteur de température (34) du deuxième arrangement de capteurs (34) détectant la température d'une section de boîtier (26) entourant la section d'échangeur de chaleur (22) au côté opposé à la source de chaleur (12).

12. Le dispositif de chauffage selon la revendication 10 ou 11, **caractérisé par** le capteur de température (34) du deuxième arrangement de capteurs (34) étant arrangé en dehors du volume de la section d'échangeur de chaleur (22) à travers lequel le fluide circulant à travers la section d'échangeur (22) circule.
